# EUROPEAN PATENT APPLICATION

(11) **EP 3 609 276 A1**
(43) Date of publication of application: **12.02.2020**
(21) Application number: 19782226.5
(22) Date of filing: 03.04.2019
(51) Int. Cl.: H04W 72/12, H04W 28/06, H04W 72/04

(54) **USER DEVICE AND BASE STATION DEVICE**

(30) Priority: 05.04.2018 JP 2018073499
(71) Applicant: NTT DOCOMO, INC., Chiyoda-ku Tokyo 100-6150 (JP)
(72) Inventor: SANO, Yousuke, Tokyo 100-6150 (JP); UMEDA, Hiromasa, Tokyo 100-6150 (JP)
(74) Representative: Hoffmann Eitle
(86) International application number: PCT/JP2019/014828
(87) International publication number: WO 2019/194228

(57) **Abstract**

A user apparatus includes a reception unit configured to receive from a base station apparatus DL-UL configurations specifying resources used for DL (Downlink), resources used for UL (Uplink), and flexibly used resources in TDD (Time Division Duplex), and to receive UL scheduling; a transmission unit configured to perform UL transmission to the base station apparatus based on the DL-UL configurations and the UL scheduling; and a control unit configured to control UL transmission not to exceed a predetermined UL resource usage rate.

## Description

### TECHNICAL FIELD

The present invention relates to a user apparatus and a base station apparatus in a wireless communication system.

### BACKGROUND ART

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In NR, various wireless technologies have been discussed in order to meet requirements including latency equal to or less than 1 ms in a wireless section while realizing a throughput equal to or greater than 10 Gbps.

In NR, wireless communications using millimeter waves have been discussed, in which it is assumed that a wide range of frequencies including a frequency band much higher than LTE (Long Term Evolution) will be used. In NR, similar to LTE, an FDD method and a TDD method are supported. In Japan, for example, 3.6 GHz-4.2 GHz band, 4.4 GHz-4.9 GHz band, and 27.5 GHz-29.5 GHz band are expected to be allocated as new frequencies for NR. In the new frequency band, the TDD method is expected to be adopted (for example, non-patent document 1).

### RELATED ART DOCUMENTS

### [Non-Patent Document]

[Non-Patent Document 1] 3GPP TS38.101-2 V15.0.0 (2017-12)

### SUMMARY OF THE INVENTION

### PROBLEM TO BE SOLVED BY THE INVENTION

In the TDD method of NR, UL (Uplink) resources and DL (Downlink) resources can be flexibly configured (set) in the time domain compared to LTE. As a result, in the case where an HPUE (High Power User Equipment), which is capable of transmission with higher maximum transmission power, performs UL transmissions, it becomes necessary to control a UL transmission rate in the time domain in order to meet SAR (Specific Absorption Rate) related requirements.

The present invention has been made in view of the above. It is an object of the present invention to control an uplink resource usage rate in the time domain in a wireless communication system.

### MEANS FOR SOLVING THE PROBLEM

According to an embodiment of the present invention, a user apparatus is provided. The user apparatus includes a reception unit configured to receive from a base station apparatus DL-UL configurations specifying resources used for DL (Downlink), resources used for UL (Uplink), and flexibly used resources in TDD (Time Division Duplex), and to receive UL scheduling; a transmission unit configured to perform UL transmission to the base station apparatus based on the DL-UL configurations and the UL scheduling; and a control unit configured to control UL transmission not to exceed a predetermined UL resource usage rate.

### ADVANTAGEOUS EFFECT OF THE PRESENT INVENTION

According to an embodiment of the present invention, it is possible to control an uplink resource usage rate in the time domain in a wireless communication system.

### BRIEF DESCRIPTION OF THE DRAWINGS

Fig. 1 is a drawing illustrating a configuration example of a wireless communication system according to an embodiment of the present invention.
Fig. 2 is a drawing illustrating an example (1) of TDD configurations.
Fig. 3 is a drawing illustrating an example (2) of TDD configurations.
Fig. 4 is a drawing illustrating a high power UE.
Fig. 5 is a sequence diagram illustrating a communication procedure in an embodiment of the present invention.
Fig. 6 is an example (1) of UL resource allocations in an embodiment of the present invention.
Fig. 7 is an example (2) of UL resource allocations in an embodiment of the present invention.
Fig. 8 is a drawing illustrating an example of a functional structure of a base station apparatus 100 according to an embodiment of the present invention.
Fig. 9 is a drawing illustrating an example of a functional structure of a user apparatus 200 according to an embodiment of the present invention.
Fig. 10 is a drawing illustrating an example of hardware structures of a base station apparatus 100 and a user apparatus 200 according to an embodiment of the present invention.

### EMBODIMENTS FOR CARRYING OUT THE INVENTION

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR or 5G).

Furthermore, in one or more embodiments described below, terms that are used in the existing LTE are used, such as SS (Synchronization Signal), PSS (Primary SS), SSS (Secondary SS), PBCH (Physical broadcast channel), PRACH (Physical Random Access Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names.

Furthermore, in an embodiment of the present invention, the duplex method may be TDD (Time Division Duplex), FDD (Frequency Division Duplex), or other methods (e.g., Flexible Duplex, or the like).

Further, in the following descriptions, "transmitting a signal by using a transmission beam" may be referred to as "transmitting a precoding-vector-multiplied signal (a signal precoded by a precoding vector)". Similarly, "receiving a signal using a reception beam" may be the same as "multiplying the received signal by a predetermined weight vector." Further, "transmitting a signal using a transmission beam" may be the same as "transmitting a signal via a specific antenna port". Similarly, "receiving a signal using a reception beam" may be the same as "receiving a signal via a specific antenna port." The antenna port refers to a logical antenna port or a physical antenna port defined in 3GPP standards.

It should be noted that the method in which the transmission beam and the reception beam are formed are not limited to the methods described above. For example, a method may be used in which the base station apparatus 100 having plural antennas changes each of the antenna angles or the user apparatus 200 having plural antennas changes each of the antenna angles. A method in which the method of using precoding vectors and the method of changing antenna angles are combined may be used, or different antenna panels may be switched. The method of switching multiple antenna panels may be combined with other methods, or some other methods may be used. Further, for example, multiple transmission beams different from each other may be used in a high frequency band. An operation using multiple transmission beams is referred to as a "multi-beam operation", and an operation using a single transmission beam is referred to as a "single-beam operation".

Further, in an embodiment of the present invention, the expression, radio (wireless) parameters are "configured (set)" may mean that a predetermined value is pre-configured or defined (specified), or may mean that a radio parameter indicated by the base station apparatus 100 or the user apparatus 200 is configured.

Here, the reason why an embodiment of the present invention focuses particularly on UL is that a device related to the effect of electromagnetic wave energy on the human body is the user apparatus. In other words, uplink transmission (UL) from the user apparatus is performed in the immediate vicinity of the user (human body). Therefore, it becomes important to consider SAR (Specific Absorption Rate) in UL from the viewpoint of the safety of mobile communication systems. It becomes more important for the user apparatus (HPUE: High power UE) to which a power class defined by a larger maximum transmission power value can be applied.

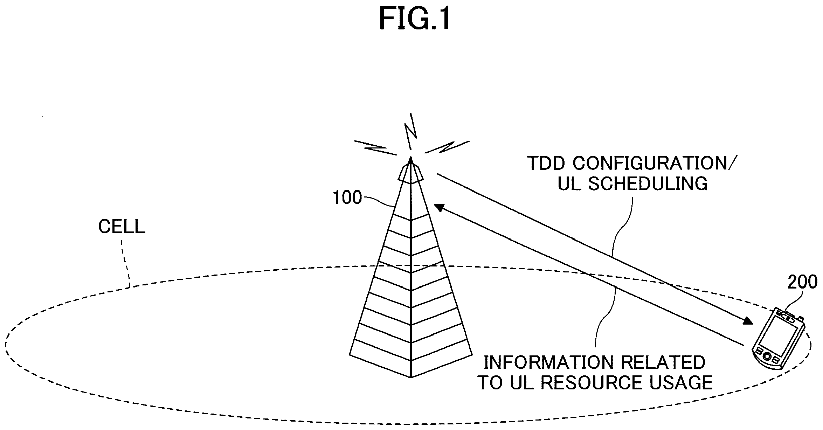

Fig. 1 is a drawing illustrating a configuration example of a wireless communication system according to an embodiment of the present invention. As illustrated in Fig. 1, the wireless communication system includes a base station apparatus 100 and a user apparatus 200. In Fig. 1, a single base station apparatus 100 and a single user apparatus 200 are illustrated as examples. There may be a plurality of the base station apparatuses 100 and a plurality of the user apparatuses 200.

The base station apparatus 100 is a communication apparatus that provides one or more cells and performs wireless communications with the user apparatus 200. As illustrated in Fig. 1, the base station apparatus 100 transmits information related to TDD configurations to the user apparatus 200. The information related to TDD configurations is, for example, information indicating which subframes, which slots, or which symbols are used for DL, UL, or "flexible" in a radio frame. Further, the base station apparatus 100 transmits to the user apparatus 200 UL scheduling based on the configured TDD configurations.

As illustrated in Fig. 1, the user apparatus 200 receives from the base station apparatus 100 the information related to TDD configurations and the UL scheduling, and performs UL transmission to the base station apparatus 100 by using UL resources. The user apparatus 200 transmits to the base station apparatus 100 information related to UL resources based on the used UL resources. The information related to UL resources includes, for example, information indicating that the UL resource usage rate exceeds a predetermined rate.

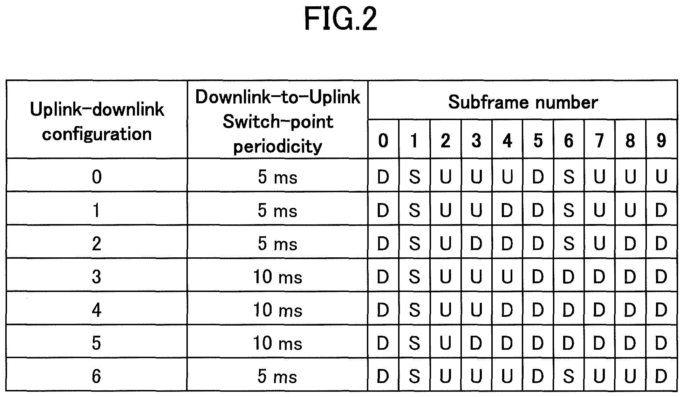

Fig. 2 is a drawing illustrating an example (1) of TDD configurations. In LTE, TDD configurations illustrated in Fig. 2 are used. As illustrated in Fig. 2, seven (7) TDD configurations are defined. In cases where "Downlink-to-Uplink Switch-point periodicity" is "5 ms", special subframes, indicated by "S", that can be used for DL and UL, are present in both of two (2) 5 ms half frames included in a 10 ms radio frame. In cases where "Downlink-to-Uplink Switch-point periodicity" is "10 ms", the special subframe, indicated by "S", that can be used for DL and UL, is present only in the first half frame among the two (2) 5 ms half frames included in a 10 ms radio frame. "D" indicates a subframe used for DL, and "U" indicates a subframe used for UL.

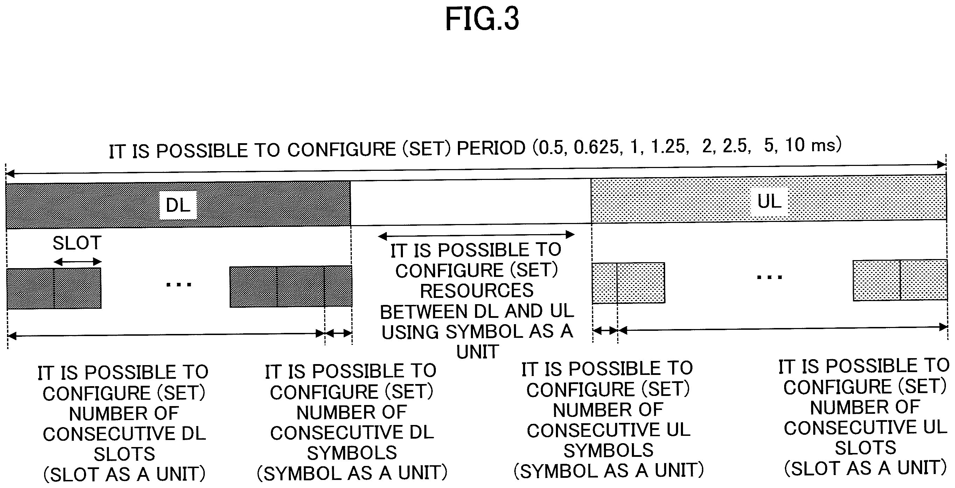

Fig. 3 is a drawing illustrating an example (2) of TDD configurations. In NR, more flexible DL and UL patterns can be configured compared to LTE. Fig. 3 illustrates an example of a case in which a TDD configuration is semi-statically configured.

As illustrated in Fig. 3, periodicity of the TDD configurations can be configured by selecting from 0.5 ms, 0.625 ms, 1 ms, 1.25 ms, 2 ms, 2.5 ms, 5 ms, and 10 ms. Further, as illustrated in Fig. 3, it is possible to configure (set) a number of consecutive (continuous) DL slots (using slot as a unit) from the start of the TDD configuration period. It is possible to configure (set) a number of consecutive (continuous) DL symbols (using symbol as a unit) that are continuously provided after the consecutive DL slots. Further, as illustrated in Fig. 3, it is possible to configure (set) a number of consecutive (continuous) UL slots (using slot as a unit) from the end of the TDD configuration period. It is possible to configure (set) a number of consecutive (continuous) UL symbols (using symbol as a unit) that are continuously provided before the consecutive UL slots. There are flexible resources between the DL and the UL illustrated in Fig. 3. The flexible resources are resources dynamically used for DL or UL, which can be configured (set) by using symbol as a unit.

It should be noted that, in the case where the TDD configuration is dynamically configured, it is possible to dynamically configure those slots that are not configured semi-statically. In other words, the semi-static configuration has higher priority than the dynamic configuration. It is possible to dynamically configure only those symbols that are configured as flexible in the semi-static configuration. The base station apparatus 100 transmits (indicates) to the user apparatus 200 a TDD configuration indicating resources that are dynamically used for UL or DL, by using a predetermined DCI format.

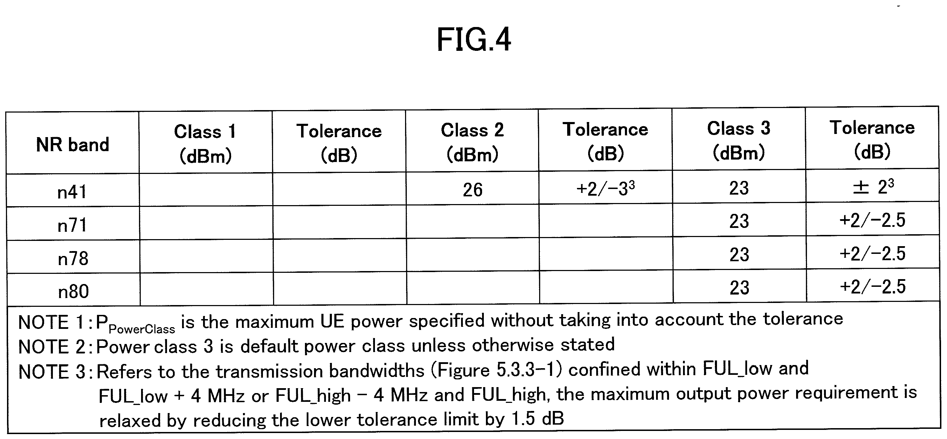

Fig. 4 is a drawing illustrating a high power UE. Fig. 4 is of examples of UE power classes that specify the maximum transmission power of the user apparatus 200. As illustrated in Fig. 4, "26 dBm" is set (specified) for "Class 2" when "NR band" is "n41". For example, the maximum transmission power 23 dBm of the default power class 3 is applied in the frequency band less than 6 GHz. However, if it is allowed by the legal system, up to maximum 26 dBm transmission corresponding to Class 2 is allowed. A user apparatus 200, to which a power class that is specified by a maximum transmission power exceeding that of the default power class is applied, is referred to as HPUE (High power UE). It should be noted that the HPUE is not limited to NR, the HPUE is also defined in LTE. It should be noted that a UE, to which a power class other than Class 2 such as "Class 1" whose maximum transmission power is "29 dBm" is applied, is also referred to as HPUE.

Here, in wireless communications, it is necessary to meet the requirements related to SAR which indicates a specific absorption rate of electromagnetic energy added to a specific part of the human body. Regarding the HPUE, taking into account SAR, it is necessary for the UL transmission rate to be limited to a predetermined rate. The predetermined rate is 50%, for example. "UL transmission rate is 50%" may mean "a ratio of UL symbols with respect to all resources in the time domain is 50%", or, "a ratio of UL symbols, which are transmitted using transmission power exceeding 23 dBm, with respect to all resources in the time domain is 50%". The "all resources" correspond to a predetermined period such as last 6 minutes, for example. It should be noted that, with respect to the HPUE of LTE, "1" to "5" of "Uplink-downlink configuration" can be used, and "0" and "6" of "Uplink-downlink configuration" cannot be used.

In NR, TDD configurations can be flexibly configured, and, if a HPUE is present in a network, it is necessary for the HPUE to satisfy specifications related to SAR. In other words, it is necessary to limit the UL transmission rate of the HPUE to 50%. For example, when limiting the UL transmission rate, there are a method in which the slot formats are not limited, and a method in which an available subset of the slot formats is selected which is allowed to be used.

Here, UE power class is signaled as a UE capability from the user apparatus 200 to a network. In other words, the maximum transmission power of the user apparatus 200 is a capability specific to the user apparatus 200. Therefore, in the case where the UL-DL configuration is fixed by the method in which an available subset of the slot formats is selected, there is a possibility that the TDD configuration is limited for all user apparatuses 200 that are not a HPUE, and an unnecessary UL resource limitation may occur. Therefore, a method is preferable which causes the TDD configuration limitation to be applied to only the HPUE.

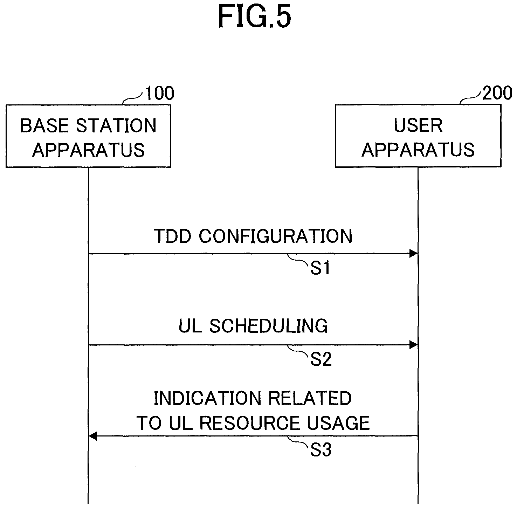

Fig. 5 is a sequence diagram illustrating a communication procedure in an embodiment of the present invention.
In step S1, the base station apparatus 100 transmits information indicating a TDD configuration as illustrated in Fig. 3 to the user apparatus 200. Next, the base station apparatus 100 transmits to the user apparatus 200 UL scheduling based on the TDD configuration (S2). The user apparatus 200 performs UL transmission based on the UL scheduling and, if necessary, transmits an indication related to UL resource usage.

In the following descriptions, a method of controlling UL transmission rate without limiting (restricting) DL-UL resources will be described.

The base station apparatus 100 may perform UL data scheduling for a HPUE in such a way that the UL resource use rate will be less than 50%. The target value of the UL resource use rate is not limited to 50%. The target value may be X%, where X is any value. The value of X may be predefined in the specification. Further, the value of X may be indicated from a network to the user apparatus 200 via broadcast information, RRC (Radio Resource Control) signaling, MAC (Medium Access Control) signaling, or PHY signaling. Further, the value of X may be independently determined by the user apparatus 200. Further, the value of X may be defined or configured as a common value throughout the UE power classes. Alternatively, the value of X may be defined or configured as a different value specific to each of the UE power classes. It should be noted that the value of X may be configured to be a smaller value as the transmission power of the HPUE increases. For example, the value of X may be 50% in the case where the maximum transmission power of the HPUE is 26 dBm, and may be 40% in the case where the maximum transmission power of the HPUE is 28 dBm. In the following descriptions, the UL resource use rate of "50%" may be replaced with "X%".

Methods (1), (2), and (3), in which the base station apparatus 100 performs UL data scheduling for a HPUE in such a way that the UL resource use rate is less than 50% in order to control the UL transmission rate without limiting (restricting) the DL-UL resources, will be described below.

Method (1): The base station apparatus 100 may control everything, and perform UL data scheduling for a HPUE in such a way that the UL resource use rate will be less than 50%.

Method (2): The HPUE may indicate that the UL resource use rate has exceeded, or is about to exceed, 50% to the base station apparatus 100 using a PUCCH or RACH resource; and the base station apparatus 100 may stop UL scheduling in the case where the indication is received.

It should be noted that, in the case where, for example, the device temperature increases due to the UL transmission, the user apparatus 200 may transmit the indication to the base station apparatus 100 regardless the value of the UL resource use rate. Further, the user apparatus 200 may indicate a desired UL scheduling granularity to the base station apparatus 100. The UL scheduling granularity is a predetermined period such as every z seconds. The user apparatus 200 may transmit these indications in the case where the user apparatus 200 belongs to a default power class.

Method (3): The HPUE may indicate that the UL resource use rate has become equal to or less than 50% to the base station apparatus 100 using a PUCCH or RACH resource; and the base station apparatus 100 may start UL scheduling in the case where the indication is received.

Methods (1) and (2), in which the base station apparatus 100 controls UL transmission power of a HPUE in order to control UL transmission rate without limiting (restricting) DL-UL resources, will be described below.

Method (1): The base station apparatus 100 may operate in such a way that the UL transmission power is equal to or less than the default value (23 dBm) for resources corresponding to UL resource use rate of 50% or more.

Method (2): The HPUE may indicate that the UL resource use rate has exceeded, or is about to exceed, 50% to the base station apparatus 100 using a PUCCH or RACH resource; and the base station apparatus 100 may start the operation of controlling the UL transmission power in the case where the indication is received. Further, the HPUE may indicate that the UL resource use rate has become equal to or less than 50% to the base station apparatus 100 using a PUCCH or RACH resource; and the base station apparatus 100 may stop the operation of controlling the UL transmission power in the case where the indication is received.

Methods (1), (2), (3), (4), (5), and (6), in which, in order to control UL transmission rate without limiting (restricting) DL-UL resources, the HPUE autonomously stops transmission in the case where the UL transmission rate of 50% is scheduled, will be described below. One or more of the methods (1), (2), (3), (4), (5), and (6) may be combined and performed.

Method (1): The HPUE may stop transmission with respect to all signals.
Method (2): The HPUE may transmit preferentially control signals such as PUCCH or SRS (Sounding Reference Signal) and stop transmission with respect to only data signals (for example, PUSCH)
Method (3): The HPUE may transmit preferentially data signals (for example, PUSCH) and stop transmission with respect to control signals such as PUCCH or SRS (Sounding Reference Signal).
Method (4): A network may switch the above methods (1), (2), and (3).
Method (5): The HPUE may indicate that the UL resource use rate has exceeded, or is about to exceed, 50% to the base station apparatus 100 using a PUCCH or RACH resource. Further, the HPUE may indicate that the UL resource use rate has become equal to or less than 50% to the base station apparatus 100 using a PUCCH or RACH resource.
Method (6): The base station apparatus 100 may indicate to a HPUE resources of which non-transmission is allowed, using upper layer signaling, for example.

Methods (1), (2), (3), (4), and (5), in which the HPUE autonomously reduces UL transmission power in order to control UL transmission rate without limiting (restricting) DL-UL resources, will be described below.

Method (1): The HPUE may reduce the UL transmission power at all times.
Method (2): The HPUE may reduce the UL transmission power with respect to only those UL resources that exceed the UL resource use rate 50%.
Method (3): The base station apparatus 100 may indicate a maximum power reduction (MPR) to a HPUE.
Method (4): The HPUE may indicate that the UL resource use rate of the HPUE has exceeded, or is about to exceed, 50% to the base station apparatus 100 using a PUCCH or RACH resource. Further, the HPUE may indicate that the UL resource use rate has become equal to or less than 50% to the base station apparatus 100 using a PUCCH or RACH resource.
Method (5): The base station apparatus 100 may indicate to a HPUE in advance those resources to which low transmission power is allowed to be applied, using upper layer signaling, for example.

For controlling the UL transmission rate without limiting (restricting) DL-UL resources, method (1): the base station apparatus 100 performs UL data scheduling for a HPUE in such a way that the UL resource use rate will be less than 50%; method (2): the base station apparatus 100 controls UL transmission power of the HPUE; method (3): the HPUE autonomously stops transmission in the case where the UL transmission rate 50% is scheduled; and method (4): the HPUE autonomously reduces UL transmission power, may be combined and performed. Further, the HPUE may report to the base station apparatus 100 as UE capability that the HPUE is capable of performing the method (3) or method (4).

In the following descriptions, a method of controlling UL transmission rate by limiting (restricting) DL-UL resources will be described.

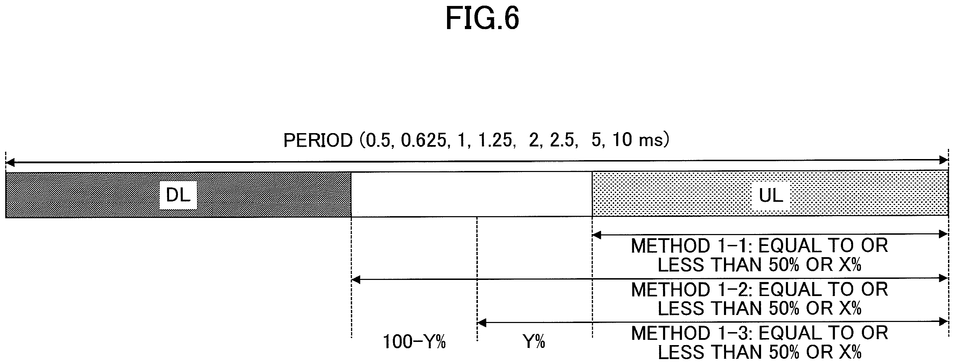

Fig. 6 is an example (1) of UL resource allocations in an embodiment of the present invention. In the case where the user apparatus 200 is semi-statically configured with UL-DL config common as (including) a TDD configuration, the base station apparatus 100 may perform one of resource allocation methods 1-1, 1-2, 1-3, and 1-4 as shown below by using the UL-DL config common.
Method (1-1): as illustrated in Fig. 6, allocation of UL resources may be equal to or less than 50% or X%.
Method (1-2): as illustrated in Fig. 6, allocation of UL resources and flexible resources may be equal to or less than X%.
Method (1-3): as illustrated in Fig. 6, allocation may be equal to or less than X% with respect to Y% of UL resources and flexible resources. A value of Y may be the same throughout the UE power classes, or may be different for each of the UE power classes.
Method (1-4): the above-described method (1-1), method (1-2), and method (1-3) may be applied to each of the up to two configurable semi-static UL-DL periods, or may be applied to a period equal to a sum of the two UL-DL periods.

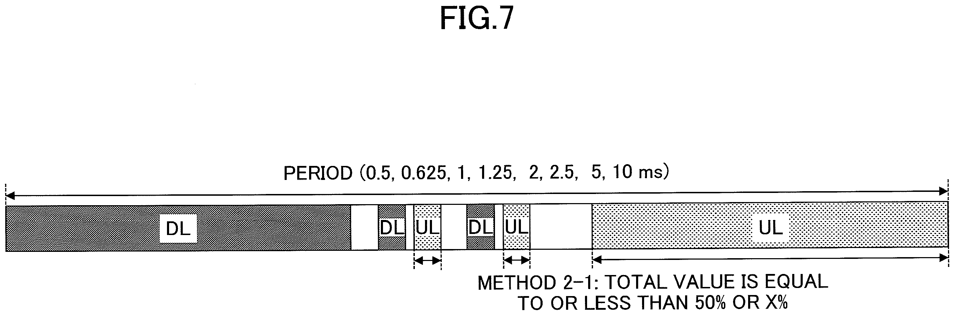

Fig. 7 is an example (2) of UL resource allocations in an embodiment of the present invention. In the case where the user apparatus 200 is semi-statically configured with UL-DL config common as (including) a TDD configuration and where UL-DL configuration dedicated as (including) a TDD configuration for flexible resources is configured, the base station apparatus 100 may perform the following resource allocation methods 2-1, 2-2, 2-3, or 2-4, using the UL-DL config common and the UL-DL configuration dedicated.
Method (2-1): as illustrated in Fig. 7, allocation of UL resources including UL resources configured in flexible resources may be equal to or less than 50% or X%.
Method (2-2): allocation of UL resources and flexible resources illustrated in Fig. 7 may be equal to or less than 50% or X%.
Method (2-3): allocation of UL resources including UL resources that are configured in Y% of flexible resources may be equal to or less than 50% or X%. A value of Y may be the same throughout the UE power classes, or may be different for each of the UE power classes.
Method (2-4): the above-described method (2-1), method (2-2), and method (2-3) may be applied to each of the up to two configurable semi-static UL-DL periods, or may be applied to a period equal to a sum of the two UL-DL periods.

It should be noted that, in the case where the user apparatus 200 is semi-statically configured with UL-DL dedicated in order to control UL transmission rate by limiting (restricting) DL-UL resources, the base station apparatus 100 may perform the method (1-1), (1-2), (1-3), or (1-4) as a method (3-1), (3-2), (3-3), or (3-4) with respect to UL resource allocation.

It should be noted that, in the case where the user apparatus 200 is semi-statically configured with UL-DL config common or UL-DL config dedicated or where the user apparatus 200 is semi-statically configured with UL-DL config common and UL-DL config dedicated in order to control UL transmission rate by limiting (restricting) DL-UL resources, the following method (4-1), (4-2), or (4-3) may be performed in the case where "DL", "UL", or "flexible" is dynamically configured via PDCCH, etc., with respect to flexible resources.
Method (4-1): in the case where the method (1-1), (2-1), or (3-1) is performed, UL resources may be dynamically configured in such a way that a sum of dynamically configured UL resources and semi-statically configured UL resources is within a range of 50% or X%.
Method (4-2): in the case where the method (1-2), (2-2), or (3-2) is performed, dynamically configured UL resources may be configured without limitation (restriction).
Method (4-3): in the case where the method (1-3), (2-3), or (3-3) is performed, dynamically configured UL resources may be configured without limitation (restriction).

It should be noted that, in the case where the user apparatus 200 is not semi-statically configured with UL-DL config, one of the above-described methods of controlling UL transmission rate without limiting (restricting) DL-UL resources may be performed.

It should be noted that, in the case where the user apparatus 200 is a HPUE, by specifying that it is required for the user apparatus 200 to be semi-statically configured with UL-DL config, one of the above-described methods of controlling UL transmission rate by limiting (restricting) DL-UL resources may be performed.

It should be noted that, in a method of controlling UL transmission rate by limiting (restricting) DL-UL resources, the HPUE may indicate to the base station apparatus 100 that the UL resource use rate of the HPUE has exceeded or is about to exceed 50% by using a PUCCH or RACH resource. Further, the HPUE may indicate that the UL resource use rate has become equal to or less than 50% to the base station apparatus 100 using a PUCCH or RACH resource.

In the above-described embodiments, it is possible for the base station apparatus 100 and the user apparatus 200 to control the UL resource use rate not to exceed a predetermined value in a case where DL-UL resources are not limited (restricted). Further, it is possible for the base station apparatus 100 and the user apparatus 200 to control the UL resource use rate not to exceed a predetermined value in a case where DL-UL resources are limited (restricted).

In other words, it is possible to control an uplink resource usage rate of a user apparatus in the time domain in a wireless communication system.

### (Apparatus structure)

Next, examples of functional structures of the base station apparatus 100 and the user apparatus 200 that perform the processes and operations described above will be described. The base station apparatus 100 and the user apparatus 200 each have at least functions for performing an embodiment of the present invention. It should be noted that the base station apparatus 100 and the user apparatus 200 each may have only a part of the functions for performing an embodiment of the present invention.

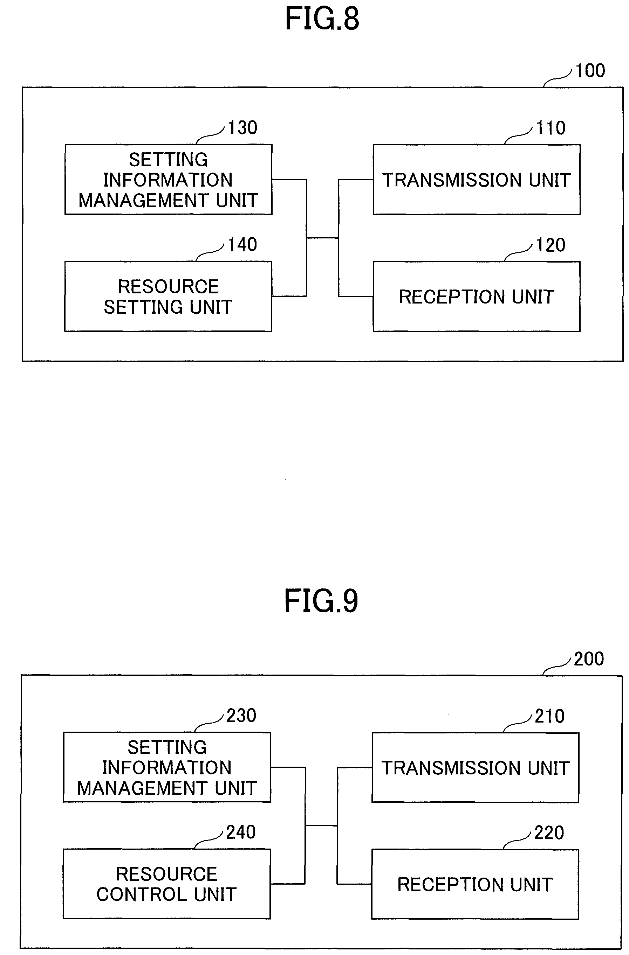

Fig. 8 is a drawing illustrating an example of a functional structure of a base station apparatus 100. As illustrated in Fig. 8, the base station apparatus 100 includes a transmission unit 110, a reception unit 120, a setting information management unit 130, and a resource setting unit 140. The functional structure illustrated in Fig. 8 is merely an example. Functional divisions and names of functional units may be anything as long as it can perform operations according to an embodiment of the present invention.

The transmission unit 110 has a function for generating a signal to be transmitted to the user apparatus 200 and for transmitting the signal wirelessly. The reception unit 120 has a function for receiving various signals including NR-PUSCH transmitted from the user apparatus 200 and for obtaining, for example, upper layer information from the received signals. Further, the reception unit 120 demodulates the NR-PUSCH based on the PT-RS received from the user apparatus 200. Further, the transmission unit 110 has a function for transmitting to the user apparatus 200 NR-PSS, NR-SSS, NR-PBCH, NR-PDCCH, or NR-PDSCH, etc. Further, the transmission unit 110 transmits various reference signals such as DM-RS to the user apparatus 200.

The setting information management unit 130 stores preset setting information and various setting information items to be transmitted to the user apparatus 200. Contents of the setting information may be, for example, information related to TDD configuration or information for scheduling, etc.

As described in an embodiment of the present invention, the resource setting unit 140 transmits information related to TDD configuration or scheduling to the user apparatus 200 from the base station apparatus 100. It should be noted that the transmission unit 110 may include a function unit in the resource setting unit 140 related to transmission to the user apparatus 200, and that the reception unit 120 may include a function unit in the resource setting unit 140 related to reception from the user apparatus 200.

Fig. 9 is a drawing illustrating an example of a functional structure of a user apparatus 200. As illustrated in Fig. 9, the user apparatus 200 includes a transmission unit 210, a reception unit 220, a setting information management unit 230, and a resource control unit 240. The functional structure illustrated in Fig. 9 is merely an example. Functional divisions and names of functional units may be anything as long as operations can be performed according to an embodiment of the present invention.

The transmission unit 210 generates a transmission signal from transmission data and transmits the transmission signal wirelessly. Further, the transmission unit 210 transmits to the base station apparatus 100 signals including various reference signals, for example, PT-RS and NR-PUSCH corresponding to the PT-RS. The reception unit 220 receives various signals wirelessly and obtains upper layer signals from the received physical layer signals. Further, the reception unit 220 has a function for receiving NR-PSS, NR-SSS, NR-PBCH, NR-PDCCH, or NR-PDSCH, etc., transmitted from the base station apparatus 100. Further, the transmission unit 210 transmits an uplink signal to the base station apparatus 100, and the reception unit 220 receives various reference signals, such as DM-RS, PT-RS, et., from the base station apparatus. The setting information management unit 230 stores various setting information items received by the reception unit 220 from the base station apparatus 100. Further, the setting information management unit 230 also stores preset setting information. Contents of the setting information may be, for example, information related to TDD configuration, information used for calculating the UL resource use rate, etc.

As described in an embodiment of the present invention, the resource control unit 240 transmits information related to UL resource usage to the base station apparatus 100. Further, the resource control unit 240 performs transmission power control based on information related to power control received from the base station apparatus 100. It should be noted that the transmission unit 210 may include a function unit in the resource control unit 240 related to transmission to the base station 100, and that the reception unit 220 may include a function unit in the resource control unit 240 related to reception from the base station apparatus 100.

### (Hardware structure)

In the above functional structure diagrams used for describing an embodiment of the present invention (Fig. 8 and Fig. 9), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless).

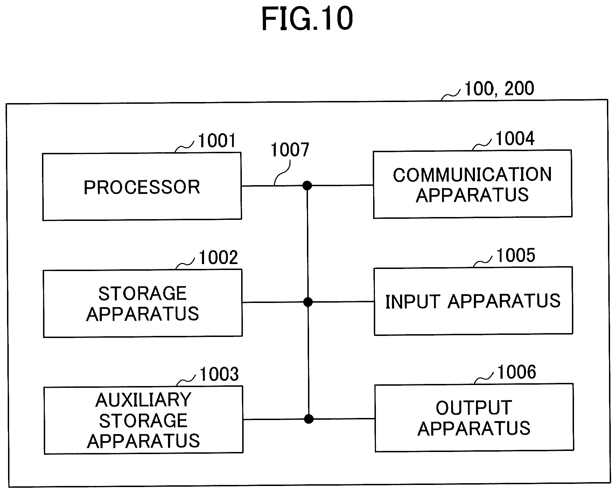

Further, for example, a base station apparatus 100 and a user apparatus 200 according to an embodiment of the present invention may function as computers that perform processes according to an embodiment of the present invention. Fig. 10 is a drawing illustrating an example of a hardware structure of a wireless communication apparatus that is a base station apparatus 100 or a user apparatus 200 according to an embodiment of the present invention. Each of the base station apparatus 100 and the user apparatus 200 may be physically a computer apparatus including a processor 1001, a storage apparatus 1002, an auxiliary storage apparatus 1003, a communication apparatus 1004, an input apparatus 1005, an output apparatus 1006, a bus 1007, etc.

It should be noted that, in the descriptions below, the term "apparatus" can be read as a circuit, a device, a unit, etc. The hardware structures of the base station apparatus 100 and the user apparatus 200 may include one or more of each of the apparatuses indicated by 1001 to 1006 illustrated in the figure, or may not include some apparatuses.

Each of the functions of the base station apparatus 100 and the user apparatus 200 is realized by causing predetermined software (program) to be read by hardware such as the processor 1001, the storage apparatus 1002, or the like, by causing the processor 1001 to perform calculations, and by causing the processor 1001 to control communications by the communication apparatus 1004, and to control reading and/or writing data by the storage apparatus 1002 and the auxiliary storage apparatus 1003.

The processor 1001 controls the entire computer by, for example, controlling the operating system. The processor 1001 may include a central processing unit (CPU) including an interface with a peripheral apparatus, a control apparatus, a calculation apparatus, a register, etc.

Further, the processor 1001 reads a program (program code), a software module, or data from the auxiliary storage apparatus 1003 and/or the communication apparatus 1004, writes the program, the software module, or the data to the storage apparatus 1002, and performs various processes according to the program, the software module, or the data. As the program, a program is used that causes the computer to perform at least a part of operations according to an embodiment of the present invention described above. For example, the transmission unit 110, the reception unit 120, the setting information management unit 130, and the resource setting unit 140 of the base station apparatus 100 illustrated in Fig. 8 may be realized by control programs that are stored in the storage apparatus 1002 and are executed by the processor 1001. Further, for example, the transmission unit 210, the reception unit 220, the setting information management unit 230, and the resource control unit 240 of the user apparatus 200 illustrated in Fig. 9 may be realized by control programs that are stored in the storage apparatus 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage apparatus 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage apparatus 1002 may be referred to as a register, a cache, a main memory, etc. The storage apparatus 1002 is enabled to store programs (program codes), software modules, or the like, that are executable for performing processes according to an embodiment of the present invention.

The auxiliary storage apparatus 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage apparatus 1003 may be referred to as an auxiliary storage apparatus. The above recording medium may be a database including the storage apparatus 1002 and/or the auxiliary storage apparatus 1003, a server, or any other appropriate medium.

The communication apparatus 1004 is hardware (transmission and reception device) for communicating with computers via a wired and/or wireless network, and may be referred to as a network device, a network controller, a network card, a communication module, etc. For example, the transmission unit 110 and the reception unit 120 of the base station apparatus 100 may be realized by the communication apparatus 1004. Further, the transmission unit 210 and the reception unit 220 of the user apparatus 200 may be realized by the communication apparatus 1004.

The input apparatus 1005 is an input device that receives an external input (e.g., keyboard, mouse, microphone, switch, button, sensor). The output apparatus 1006 is an output device that outputs something to the outside (e.g., display, speaker, LED lamp). It should be noted that the input apparatus 1005 and the output apparatus 1006 may be integrated into a single apparatus (e.g., touch panel).

Further, the apparatuses including the processor 1001, the storage apparatus 1002, etc., are connected to each other via the bus 1007 used for communicating information. The bus 1007 may include a single bus, or may include different buses between the apparatuses.

Further, each of the base station apparatus 100 and the user apparatus 200 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a user apparatus is provided. The user apparatus includes a reception unit configured to receive from a base station apparatus a DL-UL configuration indicating resources used for DL (Downlink), resources used for UL (Uplink), and flexible resources in TDD (Time Division Duplex), and UL scheduling; a transmission unit configured to perform UL transmission to the base station apparatus based on the DL-UL configuration and the UL scheduling; and a control unit configured to control the UL transmission so that a UL resource use rate does not exceed a predetermined UL resource use rate.

According to the above, it is possible for the user apparatus 200 to control the UL resource use rate not to exceed a predetermined value in a case where DL-UL resources are not limited or in a case where DL-UL resources are limited (restricted). In other words, it is possible to control an uplink resource use rate in the time domain in a wireless communication system.

The control unit transmits information indicating that the UL resource use rate exceeds the predetermined UL resource use rate in a case where the UL resource use rate exceeds the predetermined UL resource use rate due to the UL transmission, and transmits information indicating that the UL resource use rate is equal to or less than the predetermined UL resource use rate in a case where the UL resource use rate is equal to or less than the predetermined UL resource use rate due to the UL transmission. According to the above, it is possible for the user apparatus 200 to control the UL resource use rate not to exceed a predetermined value by transmitting a UL resource use situation to the base station apparatus 100.

In a case where UL resources allocated by the UL scheduling exceed the predetermined UL resource use rate, the control unit may apply at least one of stopping a part of the UL transmission, stopping all of the UL transmission, and reducing UL transmission power. According to the above, it is possible for the user apparatus 200 to control the UL resource use rate not to exceed a predetermined value by stopping UL transmissions or reducing the UL transmission power.

The stopping of the UL transmission may be applied to a data signal, a control signal, or a UL resource that is indicated to be stopped in advance, and the reducing of the UL transmission power may be applied to a UL resource for which the transmission power is indicated to be reduced in advance. According to the above, it is possible for the user apparatus 200 to identify UL resources for which the UL transmission should be stopped.

In a case where the user apparatus is a High power UE, the control unit may control the UL transmission in such a way that the UL resource use rate does not exceed the predetermined UL resource use rate based on a semi-statically configured DL-UL configuration. According to the above, in a case where the user apparatus 200 is a High power UE, it is possible for the user apparatus 200 to operate in such a way that the UL resource use rate does not exceed a predetermined value based on a semi-statically configured DL-UL configuration.

Further, according to an embodiment of the present invention, a base station apparatus is provided. The base station apparatus includes a transmission unit configured to transmit to a user apparatus a DL-UL configuration indicating resources used for DL (Downlink), resources used for UL (Uplink), and flexible resources in TDD (Time Division Duplex), and UL scheduling; a reception unit configured to receive UL transmission from the user apparatus based on the DL-UL configuration and the UL scheduling; and a setting unit configured to set (configure) the DL-UL configuration or the UL scheduling in such a way that the UL resource use rate does not exceed a predetermined UL resource use rate.

According to the above, it is possible for the base station apparatus 100 to operate in such a way that the UL resource use rate does not exceed a predetermined value in a case where DL-UL resources are not limited or in a case where DL-UL resources are limited (restricted). In other words, it is possible to control an uplink resource use rate in the time domain in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, a user apparatus UE, or a base station eNB has been described by using functional block diagrams. However, the apparatuses may be realized by hardware, software, or a combination of hardware and software. The software executed by a processor included in a user apparatus UE according to an embodiment of the present invention and the software executed by a processor included in a base station eNB according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information transmission (notification, reporting) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, an RRC message may be referred to as RRC signaling. Further, an RRC message may be, for example, an RRC connection setup message, an RRC connection reconfiguration message, or the like.

An aspect/embodiment described in the present specification may be applied to a system that uses LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next generation system enhanced based thereon.

The order of processing steps, sequences or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station apparatus 100 in the present specification, may be performed by an upper node in some cases. In a network including one or more network nodes including a base station apparatus 100, it is apparent that various operations performed for communicating with a user apparatus 200 may be performed by the base station apparatus 100 and/or another network node other than the base station apparatus 100 (for example, but not limited to, MME or S-GW). According to the above, a case is described in which there is a single network node other than the base station apparatus 100. However, a combination of multiple other network nodes may be considered (e.g., MME and S-GW).

An aspect/embodiment described in the present specification may be used independently, may be used in combination, or may be used by switching according to operations.

There is a case in which the user apparatus 200 may be referred to, by a person skilled in the arte, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

There is a case in which the base station apparatus 100 may be referred to, by a person skilled in the art, as a NB (NodeB), an eNB (enhanced NodeB), a gNB, a base station, or some other appropriate terms.

As used herein, the term "determining" may encompasses a wide variety of actions. The "determining" may include, for example, a case in which "judging", "calculating", "computing", "processing", "deriving", "investigating", "looking up" (e.g., looking up a table, database, or other data structures), or "ascertaining" is deemed as "determining". Also, "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining".

The description "based on" used in the present specification does not mean "based on only" unless otherwise specifically noted. In other words, the phrase "base on" means both "based on only" and "based on at least".

When the terms "include", "including", and variations thereof are used in the present specification or in the claims, the terms are intended to be non-restrictive (to be considered "open terminology") the same as the term "comprising". Further, the term "or" used in the present specification or in the claims is intended to be not an "exclusive or".

Throughout the present specification, in the case where articles "a", "an", and "the" are added to a noun as a result of translation, unless otherwise indicated, the noun may be plural.

It should be noted that, in an embodiment of the present invention, the resource control unit 240 is an example of a control unit. The resource setting unit 140 is an example of a setting unit.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. In other words, the descriptions of the present specification are for illustrative purposes only, and are not intended to be limitations to the present invention.

The present application is based on and claims priority to Japanese patent application No. 2018-073499 filed on April 5, 2018, the entire contents of which are hereby incorporated herein by reference.

### DESCRIPTION OF REFERENCE SIGNS

- 100: Base station apparatus
- 200: User apparatus
- 110: Transmission unit
- 120: Reception unit
- 130: Setting information management unit
- 140: Resource setting unit
- 200: User apparatus
- 210: Transmission unit
- 220: Reception unit
- 230: Setting information management unit
- 240: Resource control unit
- 1001: Processor
- 1002: Storage apparatus
- 1003: Auxiliary storage apparatus
- 1004: Communication apparatus
- 1005: Input apparatus
- 1006: Output apparatus

## Claims

1. A user apparatus comprising:
a reception unit configured to receive a DL(Downlink)-UL(Uplink) configuration indicating resources used for DL, resources used for UL, and flexible resources, and to receive UL scheduling from a base station apparatus;
a transmission unit configured to perform UL transmission to the base station apparatus based on the DL-UL configuration and the UL scheduling; and
a control unit configured to control the UL transmission not to exceed a predetermined UL resource use rate.

2. The user apparatus according to claim 1, wherein
the control unit transmits information indicating that a UL resource use rate exceeds the predetermined UL resource use rate in a case where the UL resource use rate exceeds the predetermined UL resource use rate due to the UL transmission, and transmits information indicating that the UL resource use rate is equal to or less than the predetermined UL resource use rate in a case where the UL resource use rate is equal to or less than the predetermined UL resource use rate due to the UL transmission.

3. The user apparatus according to claim 1, wherein
the control unit, in a case where UL resources allocated by the UL scheduling exceed the predetermined UL resource use rate, performs at least one of stopping a part of the UL transmission, stopping all of the UL transmission, and reducing power of the UL transmission.

4. The user apparatus according to claim 3, wherein
the stopping of the UL transmission is applied to a data signal, a control signal, or a UL resource that is indicated in advance, and
the reducing the power of the UL transmission is applied to a UL resource that is indicated in advance.

5. The user apparatus according to claim 1, wherein
in a case where the user apparatus is a High power UE, the control unit controls the UL transmission so that the UL resource use rate does not exceed the predetermined UL resource use rate based on the DL-UL configuration that is semi-statically configured.

6. A base station apparatus comprising:
a transmission unit configured to transmit a DL(Downlink)-UL(Uplink) configuration indicating resources used for DL, resources used for UL, and flexible resources, and transmit UL scheduling to a user apparatus;
a reception unit configured to perform UL reception from the user apparatus based on the DL-UL configuration and the UL scheduling; and
a setting unit configured to set the DL-UL configuration or the UL scheduling so that a UL resource use rate does not exceed a predetermined UL resource use rate.
